# EUROPEAN PATENT APPLICATION

(11) **EP 0 687 969 A2**
(43) Date of publication of application: **20.12.1995**
(21) Application number: 95304122.5
(22) Date of filing: 14.06.1995
(51) Int. Cl.: G06F 1/16

(54) **A docking device for a portable computer and a method of operating such a docking device**

(30) Priority: 16.06.1994 JP 134124/94
(71) Applicant: International Business Machines Corporation, Armonk, N.Y. 10504 (US)
(72) Inventor: Yanagisawa, Takashi, Yokohama-shi, Kanagawa-ken (JP)
(74) Representative: Horner, David Richard

(57) **Abstract**

The present invention provides a docking device for a portable computer, and a method for its control, which enables docking even if the portable computer is in a power-on state or in a power save mode such as suspend (in other words, an active state in which the power supply to the portable computer is not completely shut down). The docking device of the invention is dockable with a portable computer by one or more connections for passing signals between the docking device and the portable computer, the docking device comprising a first connection means for immediately and electrically connecting to the portable computer those of said connections which are arranged to carry a first set of signals which can be actively inserted or removed, and a second connection means for electrically isolating from and connecting to the portable computer those of said connections which are arranged to carry a second set of signals which cannot be actively inserted or removed.

Accordingly, even if all of the signals are mechanically integrated to be connected, the signals which can be actively inserted or removed can also be electrically connected to enable immediate use by the user, while the signals which cannot be actively inserted or removed remain electrically isolated, and thus hardware damage or malfunction of the system can be avoided.

## Description

### Field of the invention

The present invention is related to a docking device for a portable computer which is dockable with a portable computer to allow the portable computer to be used as an installed computer, and to a method for controlling the same.

### Prior art

### A. Portable computer

With recent technological innovation, portable personal computers (or portable computers) have become available which are designed and made in a small size and light weight in view of portability.

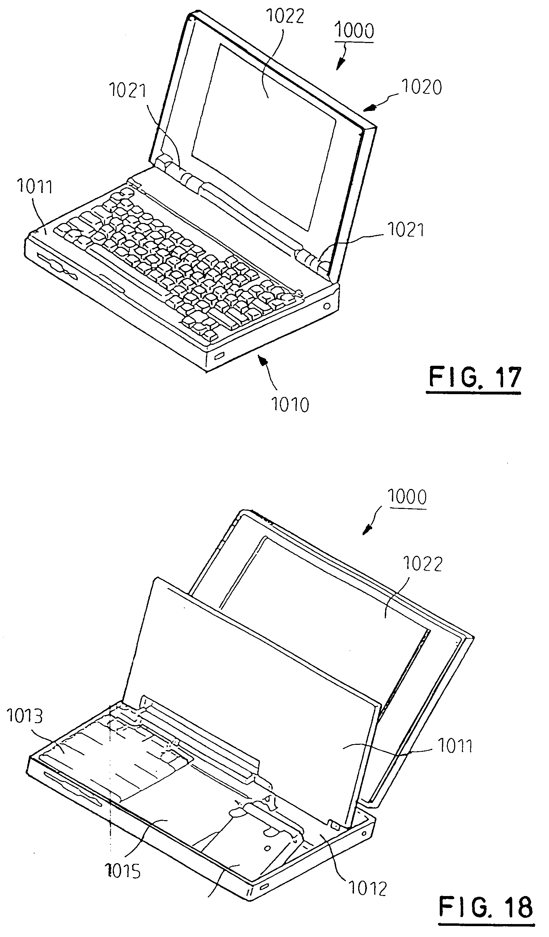

Figure 17 illustrates an example of a portable computer. In that figure, a portable computer 1000 comprises a thin main body 1010, and a cover 1020 which is connected so as to be freely opened and closed with respect to the main body 1010. The cover 1020 has a pair of projections 1021 formed in the lower end thereof, and the projections 1021 are joined for rotation with respect to the main body 1010, whereby the cover 1020 is hinged with the main body 1010. In substantially the central section of the open side (namely the back) of the cover 1020, a liquid crystal display (LCD) 1022 is disposed as the display means of the computer. Further, on the top of the main body 1010, a keyboard 1011 is disposed as the input means of the computer. In Figure 18, the inside of the main body 1010 is shown as exposed by opening the keyboard 1011 section. The inside of the main body 1010 is partitioned into a front section and a back section by a partition 1012. In the back section hidden by the partition 1012, the circuit board (not shown) of the computer including a CPU, ROM, RAM, system bus, and the like is accommodated. In addition, in the space in front of the partition 1012, peripheral devices such as a floppy disk drive (FDD) pack 1013 and hard disk drive (HDD) pack 1014 and a battery pack 1015 are received in a removable manner.

### B. Docking device for a portable computer (docking station)

For such a portable computer, portability is regarded as important, and thus there is a limitation to external storage and communication units which can be built in the computer. Further, when a portable computer is used on the desk top, it is very cumbersome to separately perform the docking with various cables such as the printer cable, monitor cable, and communication cable and an AC adapter. In addition, since the portable computer is small in size, the size and number of devices which can be accommodated are limited. Thus, a docking device for a portable computer, also called an "expansion unit" or a "docking station," for supporting the capability of the portable computer (hereinafter, simply referred to as a "docking device" or a "docking side" whereas a portable computer to be connected and used is also simply referred to as a "host") has already been developed and is publicly known.

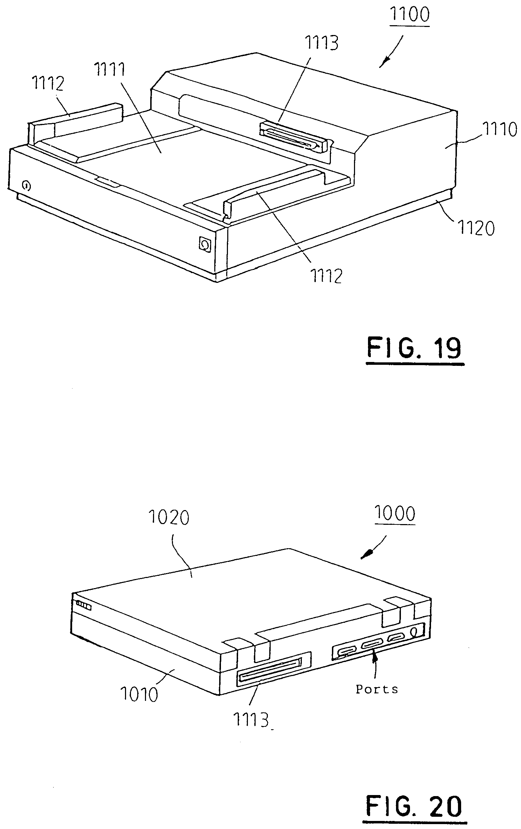

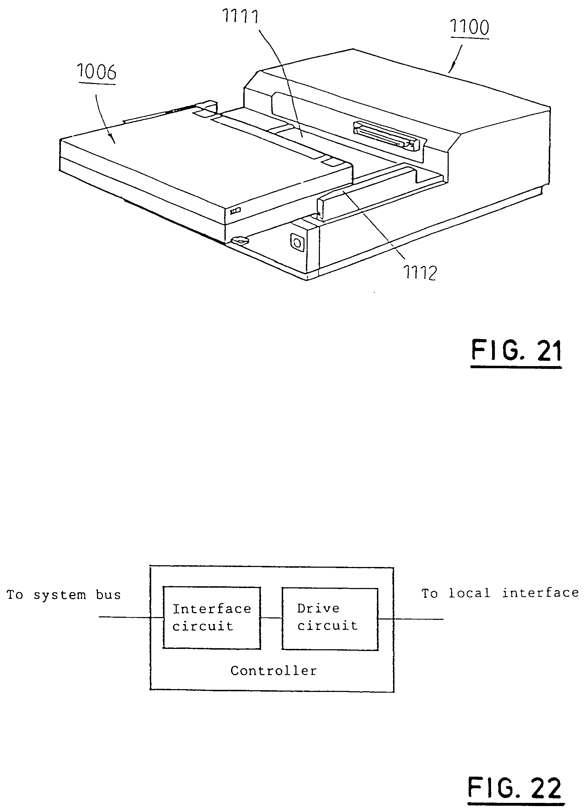

Figures 19 to 21 illustrate the docking station disclosed in the specification of Japanese Patent Application No. 4-291028, the external appearance (back) of a portable computer which can be docked with the docking station, and both systems during the docking and undocking operation. In Figure 19, the main body of docking device 1100 consists of a base body 1110 and a cover 1120. The base body 1110 has a support section 1111 on which the portable computer 1000 is mounted, and on both sides of the support section 1111 there are provided guides 1112 into which the portable computer is inserted. In the back of the support section 1110, a connector 1113 for connection of signals between the portable computer 1000 is provided to be exposed toward the front side. Further, in Figure 20, a portable computer 1000 consists of a main system body 1010 and a cover 1020, but the detailed explanation thereof is omitted to avoid duplication of Figure 17. In the back of the main system body 1010, there is a connector 1113 for connection of signals between the docking device 1100. In Figure 21, the portable computer 1000 slides along the guides 1112 from the back end and is mounted on the support section 1111, and both systems 1000 and 1100 are docked by connection of their connectors 1113. Undocking is performed in a reverse procedure.

Docking devices for a portable computer are also described in other patent applications, for instance, in the Japanese Patent Application Laid-open No. 3-273323 official gazette, Japanese Patent Application Laid-open No. 3-294917 official gazette, Japanese Patent Application Laid-open No. 4-617 official gazette, Japanese Patent Application Laid-open No. 4-186411 official gazette, Japanese Utility Model Application Laid-open No. 3-119220 official gazette, and Japanese Utility Model Application Laid-open No. 3-127933 official gazette.

The docking device for a portable computer generally has two major functions, "port replication" and "bus expansion."

On the one hand, the port replication function is achieved by provision of the extension of the port signals of the portable computer side in the docking device. That is, if the above-described various cables are previously connected to the individual ports on the docking device side, the user can use a printer, monitor, etc., by merely docking the portable computer with the docking device, whereby the cumbersome work of separately connecting cables can be eliminated. In addition, the number of ports which can be mounted on the docking device is usually larger than the portable computer, and consequently more devices can be added on.

On the other hand, the bus expansion function is achieved by the docking device having the extension of the system bus in the portable computer. Since the portable computer is compact, the number of devices which can be directly connected to the system bus (for instance, ISA bus) (which can be built in the computer) is relatively small. Accordingly, by connecting desired devices to the system bus extended on the docking device side, the devices which the portable computer can use can effectively be added on. The devices mentioned here include an add-on HDD (for instance, IDE_HDD), SCSI device, PCMCIA device and the like. The SCSI device and PCMCIA device are devices which conform to the Small Computer System Interface (SCSI) standard and Personal Computer Memory Card Interface Association (PCMCIA) standard, respectively, (in brief, it is to be understood that IDE, PCMCIA, and SCSI are standards for connection with devices expect for part of the ISA bus signals), and they are usually connected to the system bus through a SCSI controller and a PCMCIA controller. Accordingly, if the SCSI controller and the PCMCIA controller are provided on the system bus on the docking device side, devices are easily added on.

Accordingly, the main role of the docking device for a portable computer is to supplement the functions of the portable computer which are insufficient because of its compact structure.

### C. Docking of a portable computer with the docking device

The connection of a docking device with a portable computer is usually performed by a single connector in which all of the connections for the port signals, bus signals, control signals and the like are bundled into one, rather than by discrete connectors provided for the respective cables and devices. The reason for this is that, if connection is made independently for a plurality of ports or connectors, mechanical alignment between each connector would be required in addition to the mechanical alignment between each pin in the connectors, so that it would be difficult or impossible to manufacture the unit.

For instance, in the above described Japanese Patent Application No. 4-291028, the docking station 1100 and the portable computer 1000 are docked only by the single connector 1113 formed by bundling all of the signal connections, as shown in Figures 19 and 20. Further, in accordance with the drawings attached to each specification of the additionally noted official gazettes of Japanese Patent Application No. 3-273323, Japanese Patent Application No. 3-294917, Japanese Patent Application No. 4-617, Japanese Patent Application No. 4-186411, Japanese Utility Model Application No. 3-119220, and Japanese Utility Model Application No. 3-127933, the docking device and the portable computer are described as being docked by a single connector.

If the two systems are mechanically collectively connected by a connector of a structure in which various signal connections are bundled into one, as described above, several technical problems arise. One of the problems is that of enabling both systems to be electrically connected smoothly when the portable computer is in a power-on state or a power save mode such as suspend, in other words, an active state in which the power supply to the portable computer is not completely shut off. This point is detailed below.

It will be understood from the above description that the above described connector for connecting both systems will comprise a number of connections for signals of various characteristics. From a certain viewpoint, these signal connections can be classified into two types. One type is port signal connections for connection to a keyboard, mouse and CRT, and the other type is bus signal connections such as the system bus, PCMCIA control signal, IDE_HDD control signal, and FDD signal. One ground for such classification resides in that the port signals can be actively inserted or removed even in a power-on state (namely an active state) whereas the latter signals such as bus signals cannot actively be inserted or removed. The reason why active insertion or removal is possible or not is now briefly described.

A port signal usually communicates with the system bus through a device controller (for instance, a keyboard controller for the keyboard, and a video controller for the CRT). These controllers, if simplified, consist on the one hand of an interface circuit for communication with the system bus side, and a driver circuit (driver) for activating the port signals on the local side, as shown in Figure 22. The interface circuit is not always in an operation state, but it is adapted to be operated only by the normal signal from the local side. In consequence, the interface circuit effectively acts as a buffer, and thus the noise generated at the time of port signal connection does not propagate to the system bus. Thus, the port signals can be actively inserted or removed. On the other hand, the system bus includes bus signals which are always in an operation state (a state in which a signal is flowing), such as the data line and clock line. Accordingly, if an active insertion or removal is attempted for the system bus, the normal waveform of the bus signals in an operation state is disturbed, and, as a result, the hardware is broken, the system is shut down, or data is caused to change while it is transmitted, causing the system to hang up. Also from the software viewpoint, the system configuration on the docking side may conflict with the resources already installed on the host side, which would result in a malfunction. Thus, the active insertion or removal of bus signals causes problems in both the hardware and the software.

Also for the IDE_HDD control signal, PCMCIA control signal, FDD signal, and LCD panel control signal, active insertion or removal is not advisable since they always include a signal in an operation state or may conflict with the existing resources on the host side.

Accordingly, conventionally, the docking of a portable computer and docking device is allowed only when the power of the portable computer is in an off state, that is, a cold state and the system is not installed. Further, the portable computer could also operate in a power management mode including suspend for extending the operating time by the self-contained battery, but it could not be docked with the docking device even in a suspend mode since the power is not completely shut off. In addition, in view of the fail safe function, if the user attempted a docking regardless of a power-on state, there were also systems which performed the following operations:
(1) If the docking of the portable computer with the docking device is tried in an ordinary operation state or standby state (in other words, a power-on state), the power supply of the portable computer is forcibly shut down to prevent damage to the docking side hardware.
(2) If the docking is tried in a suspend state, the docking device forcibly inhibits the portable computer from being resumed after the docking. Further, the docking device issues a warning (usually a beep) to warn that such docking is not allowed (an operation error).
(3) If the docking is tried in a power-off state, the usual operation is performed after the docking when the power is turned on (a normal docking operation).

These three operations are summarised in Table 1 below:

| State of host before docking | Operation in docking |
|---|---|
| Ordinary operation state or Standby mode | Forcibly shut down the power supply of the host to prevent hardware damage to the equipment. |
| Suspend mode | After the docking, forcibly inhibit the host from being resumed at the docking side, and issue a warning (beep) to indicate disallowing of the docking. |
| Power off | After the docking, perform an ordinary operation with the power being turned on. |

| Table 1 | |
|---|---|
| | |

In brief, the portable computer and the docking device could not be smoothly docked while the portable computer was in a power-on state.

Incidentally, standby and suspend are part of the power management (PM) operations which recent portable computers can perform. The standby mode is a mode in which the power is shut down only for some devices such as a liquid crystal display (LCD), and the system bus remains active. The suspend mode is a mode in which the power for the sections other than the main memory is shut down after the data necessary for resuming a task is saved in the main memory, and the system bus is inactive. To return from the suspend mode to the ordinary operation state is called resume. Such a power management operation is performed, for instance, by a program called PM code loaded into the memory when the system is initiated.

However, some of the devices which can be actively inserted or removed by connection through the signal port are devices which the user desires to promptly use while the portable computer is in an operating state. For instance, a document of a program being edited on the portable computer side may be printed at once by the printer connected to the docking device. Also, a coordinate input using the mouse connected to the docking device may be desired. Even in the event that a demand desired to be immediately fulfilled occurs, if the user must take a roundabout procedure that requires temporarily turning off the power of the system before making a connection, then clearly the user may feel that it is difficult to use.

### Problems to be solved by the invention

It is an object of the present invention to provide an improved docking device for a portable computer, and a control method thereof, which enables docking to take place even if the portable computer is in a power-on state or a power save mode such as suspend, in other words, an active state in which the power supply of the portable computer is not completely shut down.

### Summary of the Invention

Accordingly the present invention provides a docking device for a portable computer which is dockable with a portable computer by one or more connections for passing signals between the docking device and the portable computer, the docking device comprising: a first connection means for electrically connecting to said portable computer those of said connections which are arranged to carry a first set of signals which can be actively inserted or removed; a second connection means for electrically isolating from and connecting to said portable computer those of said connections which are arranged to carry a second set of signals which cannot be actively inserted or removed; and a control means for controlling the signal isolation and connection by said second connection means.

In preferred embodiments, the control means of the docking device sends a previous notification of connection to the portable computer before performing the isolation or connection by the second connection means, and performs the isolation or connection of the second signals in response to the answer from the portable computer. Preferably, the control means monitors the activity status of the second signals to control the isolation and connection by the second connection means according to the activity status.

Viewed from a second aspect the present invention provides a method of operating a docking device for a portable computer which is dockable with a portable computer by one or more connections for passing signals between the docking device and the portable computer, the signals comprising a first set of signals which can be actively inserted or removed and a second set of signals which cannot be actively inserted or removed, the method comprising the step of electrically connecting said first set of signals with said portable computer, whilst electrically isolating said second set of signals from said portable computer.

In preferred embodiments the method further comprises the steps of: sending a previous notification step from said docking device to said portable computer to notify the portable computer that docking has been initiated; receiving an instruction from said portable computer to instruct said docking device whether to perform the electrical connection of said second set of signals; and in response to said instruction from the portable computer, either electrically connecting said second set of signals to said portable computer or maintaining the electrical isolation of said second set of signals.

The docking device of the present invention allows docking with, and undocking from, the portable computer even if the portable computer is in an ordinary power-on state or a power save mode such as suspend, in other words, an active state in which the power supply to the portable computer is not completely shut off.

Accordingly, on the one hand, even in the event that all of the signals are mechanically and collectively connected, the first signals (port signals) which can be actively inserted or removed can be also electrically connected at once, and the user can immediately use them. On the other hand, the second signals (bus signals) which cannot be actively inserted or removed can be maintained in an electrically isolated state, and thus, even if the user tries by mistake to dock with the docking device during the operation of the portable computer, hardware damage is avoided without forcibly shutting down the power of the portable computer.

Further, before electrically connecting bus signals, the docking side first sends a previous notification of connection (for example, generation of a software interruption such as SMI) to the host. Upon receipt of the previous notification, the host can check whether the system configuration on the docking side conflicts with the existing resources on the host side.

In addition, since the docking side monitors the activity status of bus signals to perform an electrical connection when the bus is relatively inactive, hardware problems can be prevented.

### Brief Description of the Drawings

The present invention will be described further, by way of example only, with reference to a preferred embodiment thereof as illustrated in the accompanying drawings, in which:
Figure 1 shows the hardware configuration of a portable computer and a docking device for such a portable computer according to the preferred embodiment and, more particularly, shows such a hardware configuration featuring the bus signals and port signals;
Figure 2 shows the software configuration of the portable computer;
Figure 3 shows the hardware configuration of a portable computer and the docking device for a portable computer according to the embodiment and, more particularly, shows such a hardware configuration featuring the power supply system;
Figure 4 schematically shows the pin assignment of the connector for coupling the host side and the docking side;
Figure 5 shows the construction of the signals included in the connector for coupling the host side and the docking side and, more particularly, illustrated DOCKED# for representing the docking state;
Figure 6 shows the construction of the signals included in the connector for coupling the host side and the docking side and, more particularly, illustrates NOTE_ID0 for representing the type of the host, wherein (a) shows that the host side is of the old type and (b) shows that the host side is of the new type;
Figure 7 shows the operation for docking the portable computer (host) with the docking device;
Figure 8 shows the operation for docking the portable computer (host) with the docking device and, more particularly, shows by a flowchart the operation for the docking performed when the host is in an ordinary operating state;
Figure 9 shows the operation for docking the portable computer (host) with the decking device and, more particularly, shows by a flowchart the operation for the docking performed when the host is in a suspend state;
Figure 10 shows the operation for docking the portable computer (host) with the docking device and, more particularly, shows by a flowchart the operation for the docking performed when the host is in a power-off state;
Figure 11 shows the operation for the undocking of the portable computer (host) from the docking device;
Figure 12 shows the operation for the undocking of the portable computer (host) from the docking device and, more particularly, shows by a flowchart the operation for the undocking performed when the host is in an ordinary operating state;
Figure 13 shows the operation for the undocking of the portable computer (host) from the docking device and, more particularly, shows by a flowchart the operation for the undocking performed when the host is in a suspend state;
Figure 14 shows the operation for the undocking of the portable computer (host) from the docking device and, more particularly, shows by a flowchart the operation for the undocking performed when the host is in a power-off state;
Figure 15 shows the operation for the docking of the portable computer (host) with the docking device and, more particularly, shows the operation when the host is of the type which cannot handle the interrupt demand from the docking device;
Figure 16 shows the operation for the undocking of the portable computer (host) from the docking device and, more particularly, shows the operation when the host is of the type which cannot handle the interrupt request from the docking device;
Figure 17 is a perspective view showing the appearance of the portable computer and, more particularly, showing a ready-to-use state with the LCD in place for use;
Figure 18 is a perspective view showing the appearance of the portable computer and, more particularly, showing a state in which the inside of the main body is exposed by opening the keyboard;
Figure 19 is a perspective view showing the appearance of the docking device for a conventional portable computer;
Figure 20 is a perspective view showing the appearance of the portable computer and, more particularly, a perspective view as seen from the back;
Figure 21 shows the manner of docking the portable computer to or undocking it from the docking device for a portable computer; and
Figure 22 schematically shows the construction of each device controller interposed between the system bus and the port signals.

### Embodiment

### A. System hardware configuration

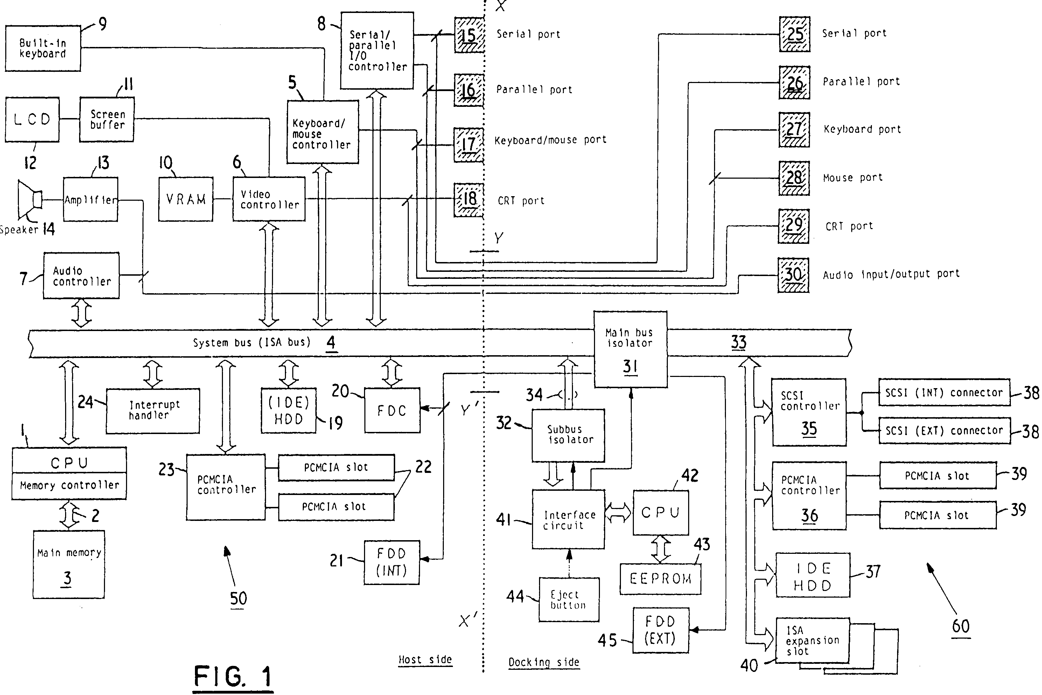

Figure 1 shows the hardware configuration of the docking device for a portable computer and the portable computer related to the preferred embodiment of the present invention. Those skilled in the art will readily understand that, in this figure, part of the structural elements is omitted for simplicity.

### A-1. Hardware configuration of a portable computer

In Figure 1, the section depicted to the left of a dashed line X-X' shows the hardware configuration of the portable computer (host side) 50.

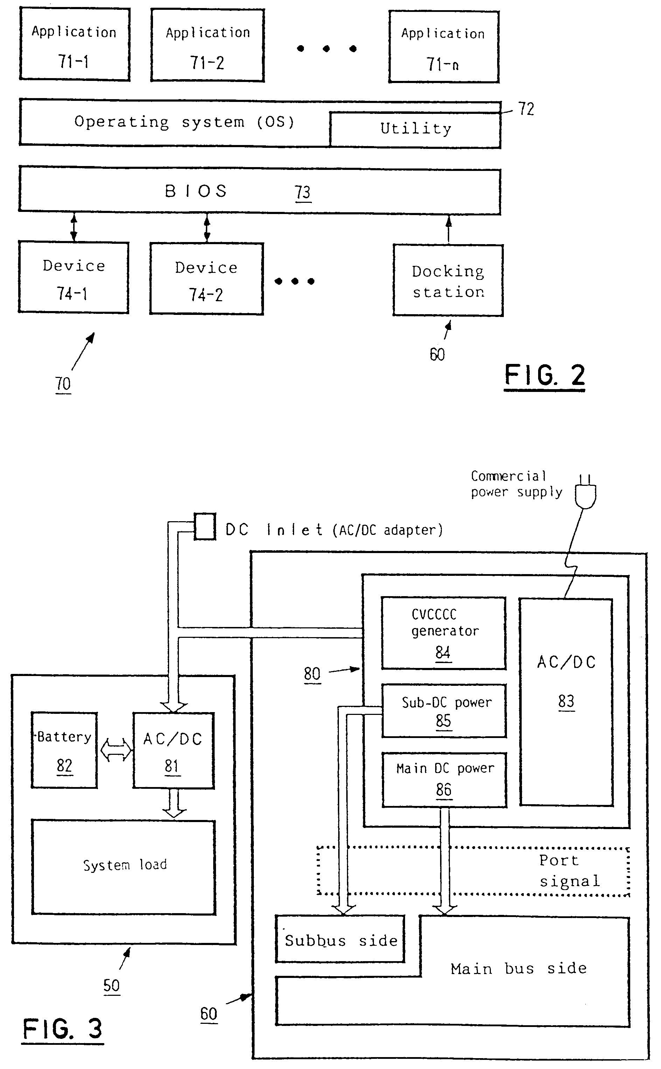

Element 1 is a CPU for controlling the operation of the whole portable computer 50. The CPU 1 related to this embodiment is a type containing a memory controller, which communicates with a main memory 3 through a memory bus 2. The main memory 3 is typically a writable memory such as DRAM. Into the main memory 3, a Basic Input/Output System (BIOS) or an operating system (OS) are loaded from ROM (not shown) or external storage (described later) when the system is initialized, and various applications are loaded on user demand. Further, the main memory 3 is adapted to temporarily store working data when the CPU 1 executes a task. In addition, in Figure 2, a software configuration 70 of the portable computer is shown. Various applications 71 ... are executed under the support of an OS/utility 72. The hardware operation for various devices (including the docking device) 74 is not directly carried out by the applications 71 ... or OS 72, but is supported by BIOS 73.

In addition, the CPU 1 is connected for communication with a keyboard/mouse controller 5, a video controller 6, an audio controller 7 and a serial/parallel I/O controller 8 through a system bus 4. Although the standard for the system bus 4 is an ISA bus in this embodiment, it is not limited to this and it may be a microchannel (MC) bus or PCI bus.

The keyboard/mouse controller 5 is to receive input signals from a mouse and a keyboard. The mouse or keyboard referred to here may be one which is externally connected through a keyboard/mouse port 17, or may be a keyboard 9 built into the portable computer 50.

The video controller 6 provides control for displaying image data according to the content of a VRAM 10. Although the portable computer 50 includes a liquid crystal display (LCD) 12 connected via a screen buffer 11, an additional CRT display (not shown) may optionally be connected via a CRT (analog video signal) port 18.

The audio controller 7 is used to process the input/output of an audio signal. The audio signal is output by a built-in speaker 14 via an amplifier circuit 13, or input or output to an external audio device (not shown) via an audio input/output port 30.

The serial/parallel I/O controller 8 is used to control timing and the like during data transfer between various I/O devices connected via a serial port 15 or a parallel port 16. Generally, a device transferring data on a bit-by-bit basis, such as a modem, is attached to the serial port 15 and a device transferring data on a byte-by-byte basis, such as a dot matrix printer, is attached to the parallel port 16.

The various ports such as the above described serial port 15, parallel port 16, keyboard/mouse port 17, and analog video port 18 are typically separately disposed on the back of the portable computer 50 (Figure 20). When docked with a docking device 60, these ports are closed by connection with the back of the support section of the docking device 60 to disable a cable from being inserted there. In addition, the various port signals branch en route to their respective ports, and are assigned to the pins within a connector Y-Y' for connection with the docking device, as described later.

Further, hard disk drive (HDD) and a floppy disk drive (FDD) are mounted on the portable computer 50 as external storage. In this embodiment, as the HDD, an IDE_HDD 19 is used which can be connected using some signals of the ISA bus. A FDD 21 is controlled by a floppy disk controller (FDC) 20 which directly communicates with the system bus 4.

Further, slots 22 are provided in the portable computer 50 for storing PCMCIA cards, and a PCMCIA controller 23 is provided for data exchange between the mounted cards and the system bus 4.

In addition, the portable computer 50 includes an interrupt handler 24. The interrupt handler 24 continuously monitors the system bus 4 (more particularly, EVENT# of the bus signals), and detects the occurrence of a software interrupt (also referred to as SMI (System Management Interrupt), and in this embodiment, ACTIVE_LOW of EVENT# corresponds to the software interrupt) in any device (including the docking device 60) and notifies the BIOS 73 of this, as described later.

### A-2. Hardware configuration of the docking device

In Figure 1, the section depicted to the right of the dashed line X-X' is the docking device (docking side) 60, The docking device 60 is communicating with the host 50 by port signals and bus signals crossing Y-Y'. These port and bus signals are assigned to each pin of a connector having an integrally bundled structure (refer to section C later), and this means that all of these signals are mechanically and integrally connected by the docking of both systems 50 and 60, as mentioned above.

The port signals outgoing from the serial parallel I/O controller 8, keyboard/mouse controller 5, video controller 6 and audio controller 7 on the portable computer 50 side respectively branch to a serial port 25, parallel port 26, keyboard port 27, mouse port 28, CRT port 29, and audio input/output port 30 on the docking device side. That is, it is understood that the respective ports 25, 26 ... on the docking side 60 act as the ports 15, 16 ... on the portable computer 50 side or expand the number of such ports. The user may connect various devices such as a modem and a printer to the respective ports beforehand, as required.

The system bus 4 on the host 50 side branches to a main bus 33 and a subbus 34 on the docking 60 side just after the connector Y-Y'.

The main bus 33 comprises the signals which cannot be actively inserted or removed, such as the IDE_HDD control signal, PCMCIA control signal, FDD signal, and LCD panel control signal, in addition to the system bus 4. An SCSI controller 35, a PCMCIA controller 36, an IDE_HDD (externally connected HDD) 37, and ISA expansion slots 40 are connected to the main bus 33 via a main bus isolator 31. The SCSI controller 35 is a controller for allowing data exchange between an SCSI device and the system bus, and, on its local side, there are disposed SCSI connectors (including both built-in and expansion types) 38 ... for connecting SCSI devices. Further, the PCMCIA controller 36 is a controller for allowing data to be exchanged between a PCMCIA device and the system bus, and, on its local side, there are disposed slots 39 ... for connecting PCMCIA cards. Those skilled in the art will readily understand that by connecting various devices and cards to these connectors 38 ... and slots 39 ..., the peripheral environment of the portable computer 50 itself can be expanded.

The main bus isolator 31 is used to electrically isolate the system bus 4 and the main bus 33 ever after the connector Y-Y' is mechanically coupled. For instance, even if the host 50 in a power-on state and the main bus 33 in a power-off state are mechanically connected, the various devices 35, 36 ... connected to the main bus.33 can be protected from hardware damage because the main bus isolator 31 electrically isolates the two from each other. The docking/undocking operation by the main bus isolator 31 is performed via an interface circuit 41 by a CPU 42, which will be described in sections D to G below.

The subbus 34 comprises some bus signals of the system bus 4, such as I/O_Read# and I/O_Write#, and a docking control signal, to be described later, and communicates with the interface circuit 41 and the CPU 42 via a subbus isolator 32. The above mentioned signals included in the subbus 34 are signals which cannot conflict with the resources on the host 50 side. In addition, the interface circuit 41 outputs data only when an I/O access is performed, and remains in a receive state except for such I/O access, so that it does not disturb the signal waveform of the system bus 4. Accordingly, the subbus 34 can be actively inserted or removed, unlike the main bus 33.

The subbus isolator 32 is to electrically isolate the system bus 4 and the subbus 34 even after the connector Y-Y' is mechanically coupled. For instance, even if the host 50 in a power-off state and the subbus 34 in a power-on state are mechanically connected, hardware damage on the host 50 side can be prevented because the subbus isolator 32 electrically isolates the two from each other. The docking/undocking operation by the subbus isolator 32 is performed via the interface circuit 41 by the CPU 42, which will be described in sections D to E below.

The CPU 42 is to control the operation of the entire docking device 60 but, in this embodiment, the control for the docking/undocking of the bus isolators 31 and 32 is especially critical (see sections D to G below). The CPU 42 causes the interface circuit 41 to perform the operations of connecting the buses 33 and 34 to the system bus 4. In the CPU 42, a nonvolatile writable memory such as an EEPROM 43 or a CMOS chip powered by a reserve battery is additionally provided, and the system configuration of the docking device 60 is written to the additional memory 43.

The interface circuit 41 contains a plurality of registers such as an output register, input register, and control register. The output register is used to write the status or data to be reported to the host 50 by the docking side 60 and, more particularly, to the CPU 42. The input register is used to write the command or data to be sent to the docking side by the host 50. The control register consists of a plurality of bit flags such as IBF (Input Buffer Full), OBF (Output Buffer Full), and a busy flag. The IBF is set to 1 when the host 50 writes a command or data to the input register (flag setting), and becomes 0 when the CPU 42 on the docking side 60 reads it (flag resetting) (if the IBF is set, an interrupt occurs in the CPU 42). The OBF is set when the CPU 42 writes a status or the like to the output register, and is reset when the host side reads it (the host side polls the setting of the OBF). The busy flag is a flag for indicating that the CPU 42 is processing a task, and no command from the host 50 is accepted while the busy flag is set. Further, the interface circuit 41 can issue an SMI to the host and the CPU 42. Input to the interface circuit 41 is an eject signal for demanding the undocking of both systems 50 and 60. The eject signal is generated when the user presses an eject button 44 disposed in the case of the docking device or by software on the host side.

Further, the FDC 20 on the host 50 side also communicates with the externally connected FDD 45 on the docking side 60. The signals for the FDC 20 to communicate with each FDD 21, 45 include those shared by both FDDs 21 and 45 such as data lines and clock lines, and those dedicated to each FDD 21, 45 such as motor enable and drive select. The data line and clock line cannot be actively inserted or removed for reasons similar to those for the bus signal. Thus, in this embodiment, the FDC 20 is made to communicate with the FDD 45 via the main bus isolator 31.

### B. Power supply mechanism of the systems

Since, in Figure 1, the hardware configuration of the power systems of the two systems 50 and 60 was abstracted for convenience, this point is supplemented in Figure 3.

### B-1. Power system of the portable computer

Power to the system load of the portable computer 50 is supplied from a commercial power supply via an AC/DC adapter (not shown) and an AC/DC converter 81 when it is in a stand-alone state, or from a built-in rechargeable battery 82 (for instance, a Ni-MH or Ni-Cd battery). In addition, power is supplied from the docking device 60 when docked with the docking device 60, which will be explained in section B-2.

### B-2. Power system of the docking device

Power for the docking side 60 is supplied only from a commercial power supply. A power supply adapter 80 connected to the commercial power supply through an outlet has an AC/DC converter 83, a CVCPCC generator 84, a sub-DC power supply 85, and a main DC power supply 86.

The AC/DC converter 83 is used to convert the commercial power supply to a direct current. The CVCPCC generator 84 is a circuit for generating power with a volt-ampere characteristic of constant voltage → constant power → constant current, and sending the power to the host 50 side. In addition, the characteristic of CVCPCC is only for correspondence to the characteristic of the battery contained in the portable computer and is not restrictive. For instance, it may be CVCC.

The sub-DC power supply 85 is used to convert the DC current from the AC/DC converter 83 to a voltage and to supply it to the interface circuit 41 and the CPU 42 on the subbus 34 side. The sub-DC power supply 85 supplies power to the subbus 34 side whenever the docking side 60 is supplied with power from the commercial power supply, thereby always enabling the operation for docking or undocking by the interface circuit 41 and the CPU 42 (see sections D to G). Since the subbus 34 side is always in a power-on (hot) state, the subbus isolator 32 electrically isolates both systems 50 and 60 to prevent hardware damage on the host 50 side due to direct docking of the host 50 which is in a power-off (cold) state (see section A-2 above).

The main DC power supply 86 is used to convert the DC current from the AC/DC converter 83 to a voltage and to supply it to the various devices on the main bus 33 side such as the SCSI controller, PCMCIA controller, and IDE_HDD. In this embodiment, in response to the power-on of the docked host 50, or the docking of the host 50 already in a power-on state, which can be detected by DOCKED#, PWR_ON#, the main DC power supply 86 starts to supply power to the main bus 33.

In addition, the section surrounded by a dashed line is for port signals such as serial, parallel, keyboard, and mouse. Needless to say, these are only an extension of the lines from the host side and need not be supplied with power.

### C. Connector pin assignment

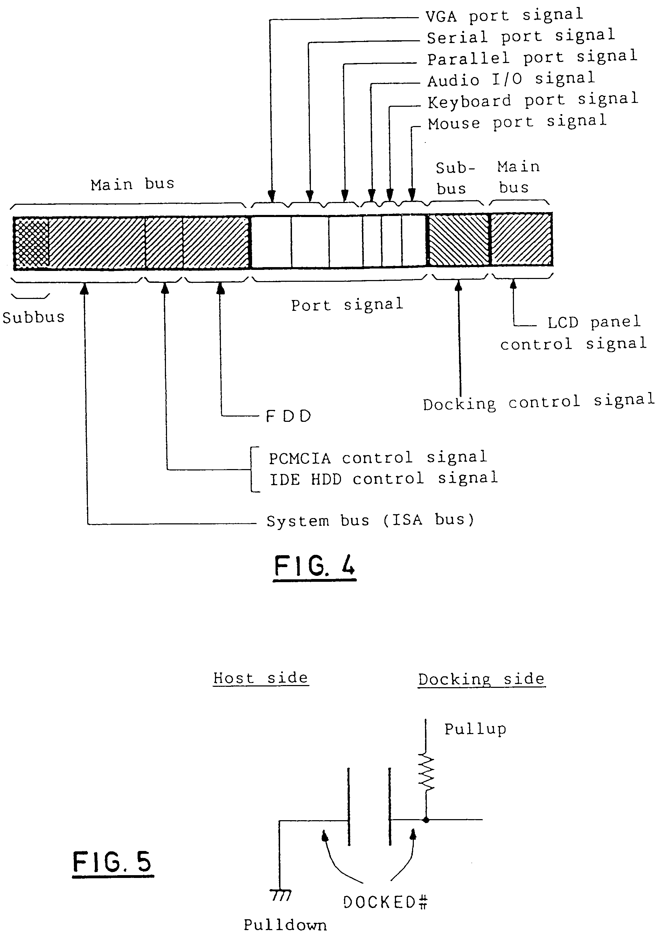

The portable computer and the docking device are docked by a single connector in which all of the signals are bundled, as already described. Figure 4 shows the pin assignment of this connector schematically. The number of pins of the connector is 240 in this embodiment. The width of the same figure generally represents the number of the assigned pins.

As shown in Figure 4, the connector is assigned the bus (system bus) signal, PCMCIA control signal, IDE_HDD control signal, FDD signal, port signals, docking control signals, LCD panel control signal, etc. The system bus is, for instance, one that is based on the ISA standard. The PCMCIA control signal and IDE_HDD control signal are signals for supporting the functions other than the ISA standard. Further, the port signals include the serial port signal, parallel port signal, keyboard port signal, and the like as is also shown in Figure 1. The docking control signals comprise the signals for controlling the docking/undocking of the docking device with the portable computer. In addition, the LCD panel control signal is a digital video signal for driving the LCD 12 from the docking side, which is one of the signals which cannot be actively inserted or removed, and thus it is included in the main bus 33 (not shown in Figure 1).

The above-mentioned docking control signals include the signals essential for the docking/undocking operation in this embodiment, such as PWR_ON#, SUS_STAT#, DOCKED#, NOTE_IDO and EVENT#. These signals are detailed below.

PWR_ON# represents the power-on/off state of the host side, and SUS_STAS# represents the power management mode on the host side. On the docking side, the power supply state of the host can be recognized as in Table 2 below according to the combination of both signals. That is, it can be determined that an ordinary operation state, including a standby mode, exists when (PWR_ON#, SUS_STAT#) is (L, H), a suspend mode exists when (L, L), and a complete power-off state exists when (H, H). Incidentally, (H, L) is a combination which does not actually exist (N/A: Not Available).

| | | PWR_ON# | | |
|---|---|---|---|---|
| | | HIGH | LOW | |
| SUS_STAT# | HIGH | Power-off | Power-on (ordinary operation/standby) | |
| | LOW | N/A | Suspend | |

| Table 2 | | | |
|---|---|---|---|
| | | | |

DOCKED# is a signal for indicating whether the portable computer is docked with the docking device. As shown in Figure 5, since DOCKED# is pulled down on the host side and pulled up on the docking side, DOCKED# on the docking side indicates ACTIVE_LOW when they are docked.

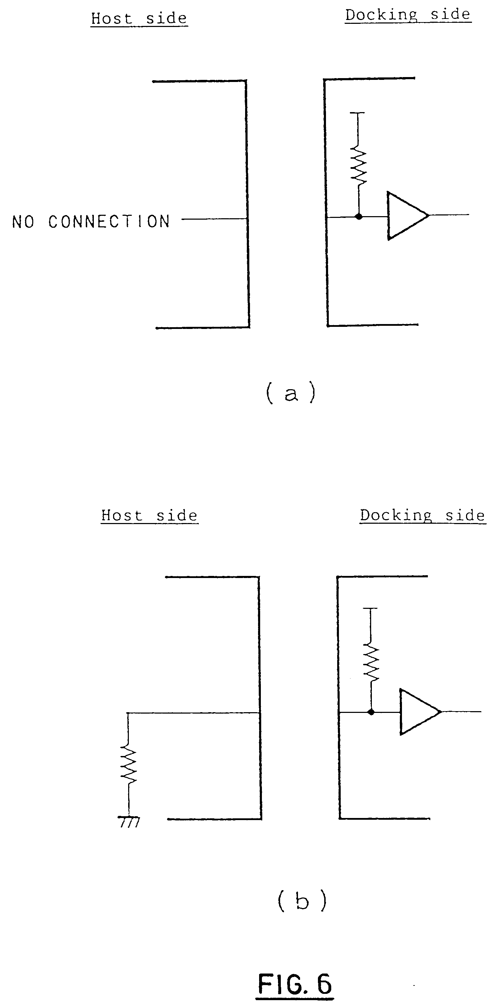

NOTE_ID0 is a signal for indicating whether the host is a new type of portable computer or an old type. Here, the new type means a portable computer having a function of communicating with the docking side, and the old type means a portable computer which does not have such a function. The communication which the host performs with the docking side specifically means that the host 50 processes the SMI issued by the interface circuit 41 and responds to the docking side 60 (see sections D and E). If the host is of the new type, the docking side 60 performs the operations described in sections D and E, and, if of the old type, it performs the operation described in sections F and G. In Figure 6, on the one hand, the specific construction of NOTE_ID0 is shown. As shown in Figure 6 (a), NOTE_ID0 of the portable computer of the old type does not have a connection relationship, and thus NOTE_ID0 on the docking side cannot obtain an output. On the other hand, as shown in Figure 6 (b), NOTE_ID0 of the portable computer of the new type is pulled down, and thus NOTE_ID0 on the docking side can obtain ACTIVE_LOW as an output.

PWR_ON#, SUS_STAT#, DOCKED# and NOTE_ID0 are provided for sending information from the host side to the docking side, while EVENT# is provided for the docking side to send information to the host. If an event to be reported to the host 50 occurs on the docking side 60, EVENT# becomes ACTIVE_LOW. In addition, the CPU 42 on the docking side 60 writes the content of the event which has occurred to the output resister in the interface circuit 41. The notification of the event by EVENT# is processed as a software interrupt (SMI) on the host 50 side. More specifically, the interrupt handler 24 always monitors EVENT#, and reports the detection of its ACTIVE_LOW to BIOS 73. Then, BIOS 73 reads the output register in the interface circuit 41 in response to this notification to determine the content of the event. In particular, the event which the docking side 60 wants to report to the host 50 is a "previous notification of docking (ABOUT_TO_DOCK)" or a "previous notification of undocking (ABOUT_TO_UNDOCK)" (see sections D and E below). Note that the docking side can utilize EVENT# on the assumption that the host is of the new type having the function of processing the SMI from the docking side (as described before).

### D. Operation for the docking of a portable computer with the docking device

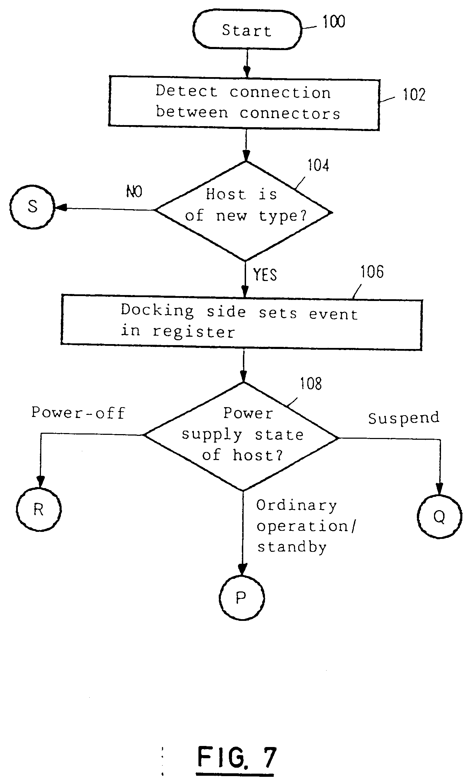

On the one hand, as already described in Figure 1 and section A, the respective port signals which can be actively inserted or removed are mechanically and electrically connected to the host 50, thereby enabling the user to use them. On the other hand, the bus signals are connected through the main bus isolator 31 or the subbus isolator 32, and they are still electrically isolated when the connector is mechanically connected. In this item, the operation for the bus signal connection is described using the flowcharts shown in Figures 7 to 10. However, it is assumed that, on the docking side 60, operation starts with power being supplied from the commercial power supply.

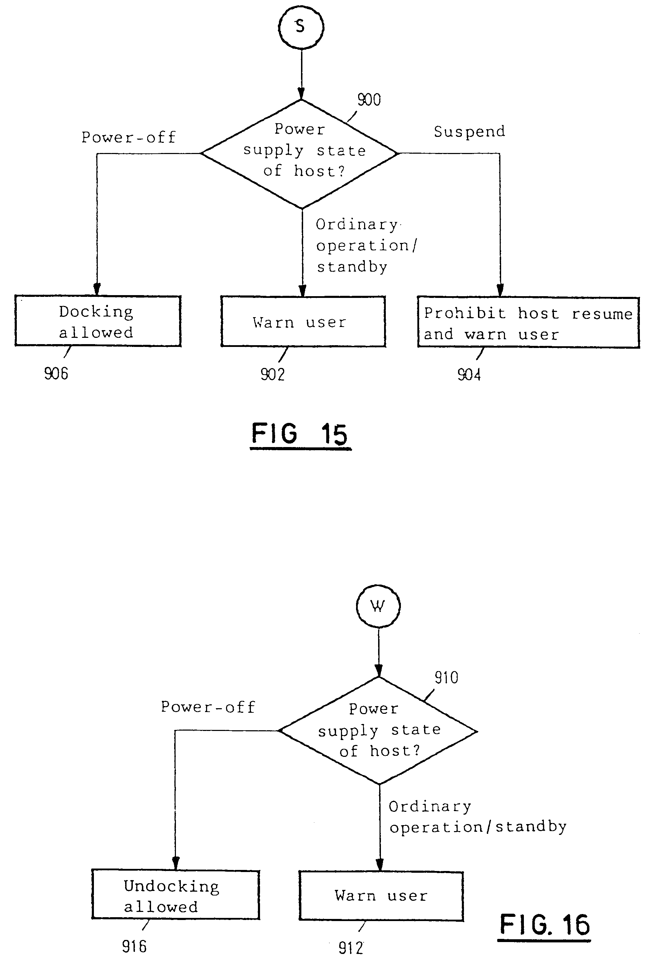

First, the connectors for connecting both systems 50 and 60 are mechanically coupled through manual operation by the user (step 100). Since the interface circuit 41 and the CPU 42 communicating with the subbus 34 side on the docking side 60 are already in an operating state, the mechanical connection can be detected by a change in DOCKED# to ACTIVE_LOW (step 102). Then, it is determined by NOTE_ID0 whether the host 50 trying a docking is a new type or an old type (step 104). If it is an old type, the SMI from the docking side 60 cannot be processed as described above, and thus the system bus 4 cannot be electrically connected in the same operation. Accordingly, the flow branches to the S side (see section F and Figure 15).

If it is determined that the host 50 is of a new type, the flow proceeds to the next step 106 where the CPU 42 writes 'ABOUT_TO_DOCK' to the output register in the interface circuit 41 and declares that an event has occurred. The subbus isolator 32 electrically connects the subbus 34 to the system bus 4. The subbus 34 can be connected with the system bus 4 at this point in time, because it can be actively inserted or removed, unlike the main bus 33 (see section A-2), and because the interface circuit 41 and the CPU 42 need to communicate with the host side in the operation after step 108.

Then, in step 108, the power supply state of the host 50 is determined by PWR_ON# and SUS_STAT#. The flow branches to P when the host 50 is in an ordinary operating state, to Q for a suspend state, or to R for a complete power-off state. The reason for this is that the process to be subsequently performed differs as follows:
(1) In an ordinary operating state, the bus 4 is active whereas in a suspend state, it is inactive.
(2) In a suspend state, the system configuration information of the host 50 side is saved in the main memory 3, whereas in a power-off state, such information is provided and no resource conflict with the docking side 60 occurs at POR (Power On Reset).

The processing after the branches P, Q, and R is described in sections D-1, D-2, and D-3 below.

### D-1. Docking when the host is in an ordinary operating state

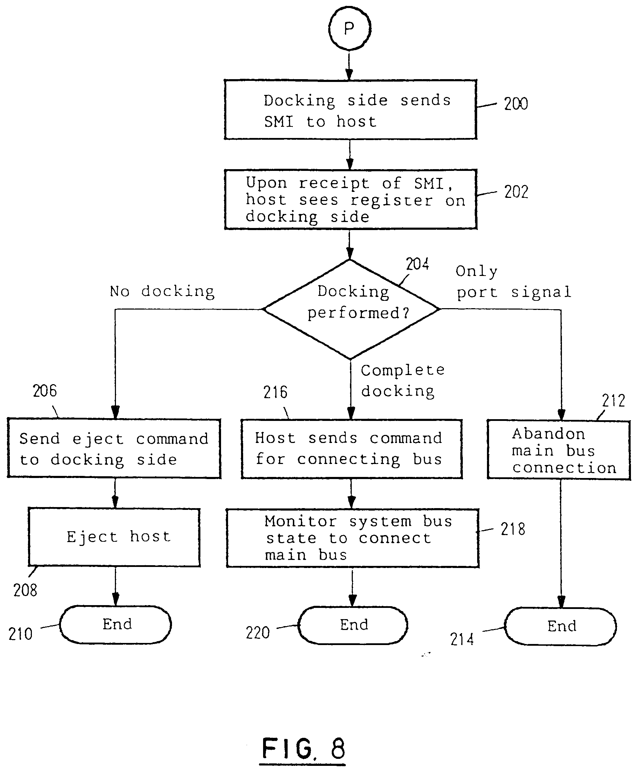

The flowchart after the branch P is shown in Figure 8. If the host 50 is in an ordinary operating state, first, in step 200, the interface circuit 41 issues an SMI to the host 50 (changes EVENT# to ACTIVE_LOW). The interrupt handler 24 detects the SMI and informs BIOS 73 of this. Then, BIOS 73 searches for which device has sent the SMI and determines that the docking side 60 is the source. Then, BIOS 73 reads the content ('ABOUT_TO_DOCK') of the output register in the interface circuit 41 to detect that docking is about to be performed for the host 50, and reports this to the OS or utility 72 (step 202). Also, at this point, the main DC power supply 86 begins to supply power to the main bus 33 side.

Then, on the one hand, the OS/utility 72 determines by software whether or not to actually perform docking (step 204). For instance, if the system configuration of the docking side 60 conflicts with the resources already installed in the host 50, the docking cannot be performed. In this case, an eject command is sent to the docking side to completely undock the host 50 (steps 206 to 210), or only the electrical connection of the main bus 33 is abandoned and the ports on the docking side 60 are continuously used (steps 212 and 214). In addition, the OS or utility 72 of the host 50 can determine the system configuration of the docking side 60 by reading the content of the EEPROM additionally provided in the CPU 42 (see the section A-2), or by storing the correspondence table of the identification number and the system configuration of the docking device beforehand 60.

On the other hand, in step 204, if it is determined that the electrical connection of the main bus 33 is also to be carried out, the host 50 sends a command "connect the bus" to the docking side 60 (step 216). This command is performed by writing a code 'BUS_CONNECT' to the input register in the interface circuit 41 and setting the IBF. The setting of the IBF causes an interrupt in the CPU 42 and the command is recognized. The CPU 42 sets the busy flag to process the 'BUS_CONNECT' command (hereafter, the command from the host cannot be accepted while the busy flag is being set). Then, the CPU 42 writes 'Acknowledge,' a code indicating acceptance of the command, to the output resister and sets the OBF. BIOS 73 is polling the OBF and, simultaneously, with the setting of the OBF, reads the output register, confirms acceptance of the command, and resets the OBF.

When the CPU 42 determines through the resetting of the OBF that BIOS 73 has accepted the command, it then causes the interface circuit 41 to perform the operation of connecting the main bus 33. Particularly, the CPU 42 monitors REFRESH# of the system bus 4, and causes the connection of the main bus 33 to be carried out at the start of the refresh cycle (step 218). The connection is made at the start of the refresh cycle, because it is known a posteriori that the activity of the system bus 4 is relatively low at this point in time, and hence the effects of signal waveform disturbances due to the bus connection are minimised.

When the electrical connection of the main bus 33 has been completed, the CPU 42 write 'CONNECTED' to the output register and sets the OBF to declare the event transition. Then, BIOS 73 reads the output register according to the setting of the OBF and resets the OBF. Next, the CPU 42 determines from the resetting of the QBF that the host 50 has authenticated the event transition (termination of the bus connection), and resets the busy flag, completing the series of processing (step 220).

If the host 50 is in a standby mode, the system bus 4 is still active, and thus this is included in an "ordinary operating state" in the broad sense.

### D-2. Docking when the host is in a suspend state

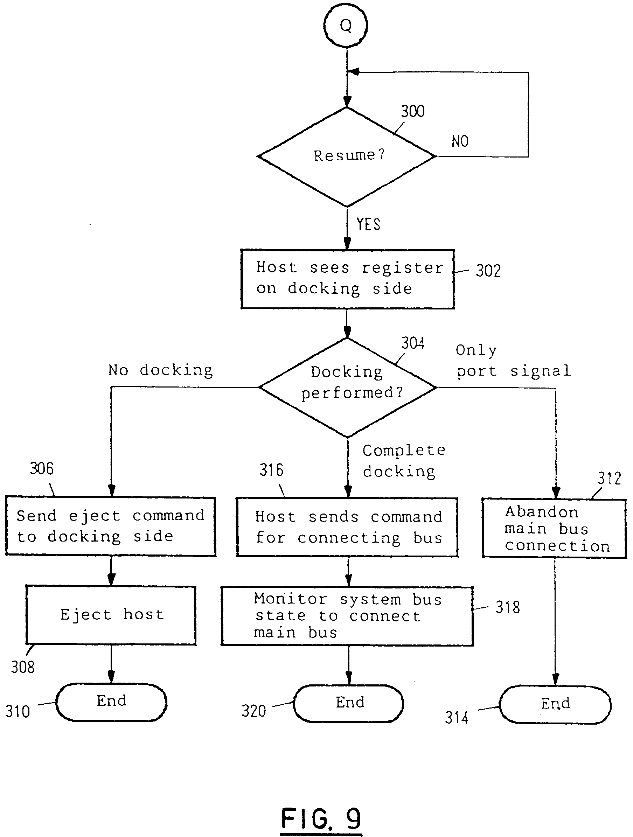

The flowchart after the branch Q is shown in Figure 9. If the host 50 is in a suspend state, the occurrence of a resume factor is waited for by the closed loop formed in a decision block 300.

Then, when a resume factor occurs, BIOS 73 on the host 50 side reads the content ('ABOUT_TO_DOCK') of the output register in the interface circuit 41, and detects that a docking is about to be performed (step 302). In addition, a resume factor may occur on the host 50 side, such as by a keyboard (function key) input, or may occur on the docking side 60, such as by the pressing of the power switch (not shown) on the docking side 60. The action in step 302 is performed by the resume code (usually loaded into the main memory 3 at initialization) on the host 50 side in the former case and, in the latter case, it is triggered by the occurrence of the SMI and performed by BIOS 73, as in section D-1.

After step 304, the process for connecting the main bus 33 is carried out, but it is substantially the same as the process after step 204 described in D-1 and hence the description thereof is omitted here. In addition, the detailed operation for the read/write of each register in the interface circuit 41 and for flag set/reset is also similar to that described in section D-1.

### D-3. Docking when the host is in a power-off state

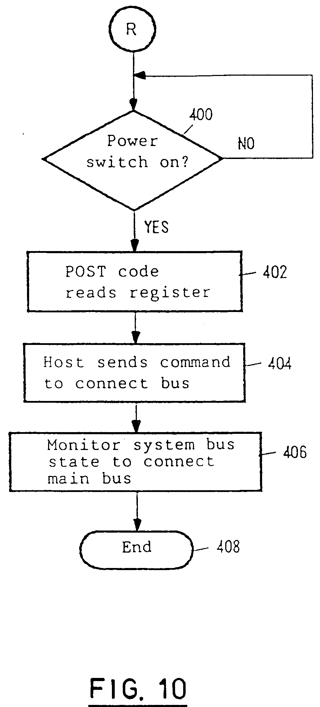

The flowchart after the branch R is shown in Figure 10. If the host 50 is in a power-off state, the flow is put in a standby state by the closed loop formed in a decision block 400 until the power supply is turned on.

Then, when the power supply for the host 50 is turned on, a self-diagnostic program (POST: Power-On Self-Test) is executed in the host 50. The POST code reads the content ('ABOUT_TO_DOCK') of the output register in the interface circuit 41 to detect that a docking is about to be performed (step 402). In addition, the docking side 60 detects the power-on of the host 50 through PWR_ON#, and then the main DC power supply 86 starts to supply power to the main bus 33 side.

If the host 50 is in a power-off state, the system configuration on the docking side 60 does not conflict with the resources of the host 50 (because the system is not installed in the host 50). Consequently, when ABOUT_TO_DOCK is read in, the POST code of the host 50 always calls for the connection of the main bus (there is no step corresponding to 204 and 304).

Then, in step 406, the main bus 33 is connected. The details are similar to the above described steps 216, 218, and 220 and hence the description thereof is omitted here.

### E. Operation for the undocking of a portable computer from the docking device

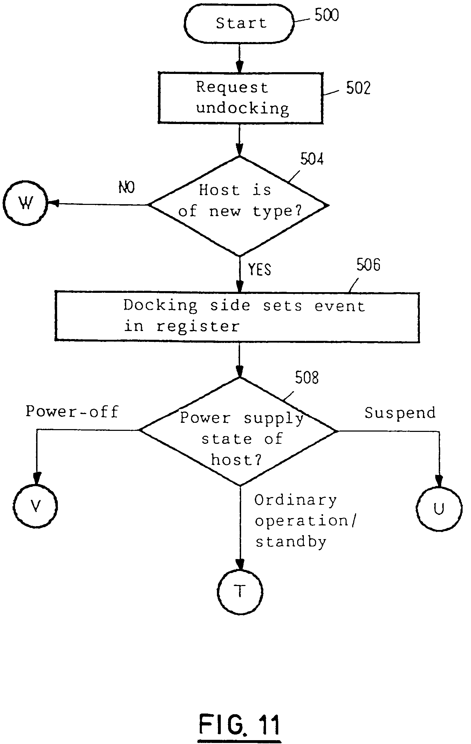

In section D, a description has been made of the operation for the docking of the portable computer and the docking device. Conversely, in this section, the operation for the undocking of both systems is described using the flowcharts shown in Figures 11 to 14.

The request for undocking is generated by the user pressing the eject button 44 on the docking side 60, or by software on the host 50 side (step 502). In the former case, the CPU 42 is activated by the eject button 44 and, in the latter case, the CPU 42 detects the request for undocking by DOCKED#. Then, on the one hand, in step 504, it is determined by NOTE_ID0 whether the host 50 under docking is of the new type or old type. If it is the old type, it cannot process the SMI produced from the docking side 60, and thus the decision block 504 is branched to the W side (see section G and Figure 16).

On the other hand, if it is determined that the host 50 is of the new type, the process goes to the next step 506 where 'ABOUT_TO_UNDOCK' is written to the output register in the interface circuit 41 to declare that the event has transited.

Then, the docking side 60 determines the power supply state of the host 50 by PWR_ON# and SUS_STAT# (step 508). The flow branches to T, when the host 50 is in an ordinary operating state, to U for a suspend state, or to V for a power-off state. The processes after the respective branches are itemized below.

### E-1. Undocking when the host is in an ordinary operating state

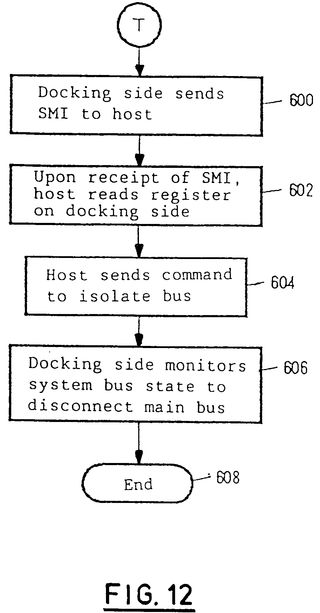

The flowchart after the branch T is shown in Figure 12. If the host 50 is in an ordinary operating state, the interface circuit 41 first issues an SMI to the host 50 (step 600). The interrupt handler 24 detects and reports the occurrence of the SMI to BIOS 73. When BIOS 73 detects that the SMI has occurred from the docking side 60, it reads the content ('ABOUT_TO_UNDOCK') of the output register in the interface circuit 41 to sense that both systems 50 and 60 are about to be undocked, and reports this to the OS or utility 72 (step 602).

Then, the OS or utility 72 sends a command "isolate the bus" to the docking side 60 (step 604). This command, more particularly, is implemented by writing a record 'BUS_DISCONNECT' to the input register in the interface circuit 41 and setting the IBF. The setting of the IBF causes an interrupt to occur in the CPU 42, and the command is recognized. Thereafter, the CPU 42 sets the busy flag to process 'BUS_DISCONNECT'. Then, the CPU 42 writes a code "Acknowledge" indicating acceptance of the command to the output register and sets the OBF. BIOS 73 is polling the OBF, and reads the content of the output register in response to the setting of the OBF, confirming that the command has been accepted and resetting the OBF.

Then, the CPU 42 determines through the resetting of the OBF that the acceptance of the command has been authenticated by the host 50, and causes the interface circuit 41 to carry out an action for isolating the main bus 33 and the subbus 34 (step 606). The isolation action is carried out at the start of the refresh cycle as is the connection action (see section D-1). In addition, after the isolation of the bus signals 33 and 34, the host 50 may be ejected from the docking side 60 by a mechanical operation.

### E-2. Undocking when the host is in a suspend state

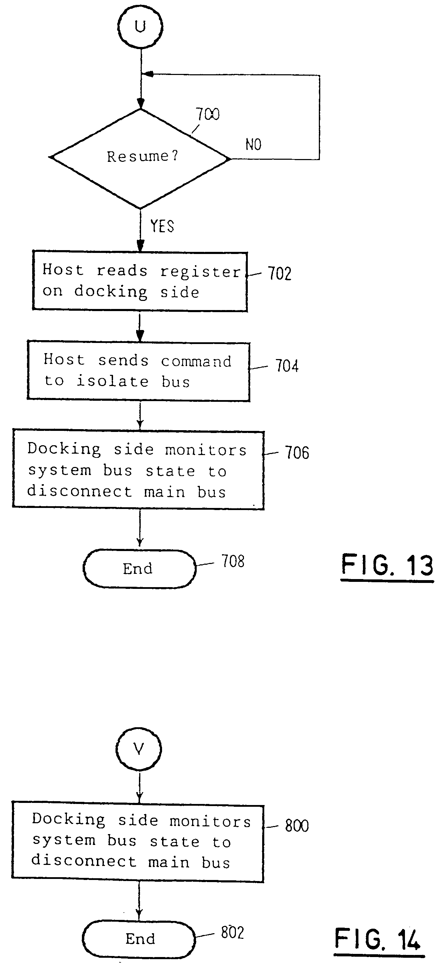

The flowchart after the branch U is shown in Figure 13. If the host 50 is in a suspend state, the occurrence of a resume factor is waited for by the closed loop formed by the decision block 700.

Then, when a resume factor occurs, BIOS 73 reads the content ('ABOUT_TO_UNDOCK') of the output register in the interface circuit 41 to detect that undocking is about to be performed (step 702). As already described in section D-2, there are two cases in which a resume factor occurs on the host side 50, and in which it occurs on the docking side 60. Step 702 is executed by the resume code in the former case and by BIOS 73 in the latter case.

In and after step 704, a process for isolating the buses 33 and 34 is performed, but it is substantially the same as the process in and after step 604 described in section E-1, and thus the description thereof is omitted here. Further, the detailed operation for the read/write of each register in the interface circuit 41 and the set/reset of the flag is also similar to that described in section E-1.

### E-3. Undocking when the host is in a power-off state

The flowchart after the branch V is shown in Figure 14. Undocking of both systems 50 and 60 when the host 50 is in a power-off state is an operation which is also usually employed in the prior art. Accordingly, the user can freely undock both systems 50 and 60 (step 800). In addition, after the undocking, if power is applied to the host 50, POR is executed in the usual manner.

### F. Docking operation if the portable computer is of the conventional type

If the host 50 is a portable computer of the old type, it cannot handle the SMI from the docking side 60, as already described in section C. In consequence, it will be appreciated by those skilled in the art that operations similar to sections D and E cannot be performed for the portable computer of the old type. Thus, in this embodiment, if the host is determined to be of the old type in step 104 (see Figure 7), another operation is performed through the branch S. In this section, the operation after the branch S is described with reference to Figure 15. In addition, the docking side 60 uses PWR_ON# and SUS_STAT# to determine the power supply state of the host 50, as described earlier.

### F-1. Docking when the host is in an ordinary operating state

If docking is attempted when the host 50 is in an ordinary operating state (step 900), the docking side 60 beeps to warn the user that it is an operation mistake (step 902). More specifically, the CPU 42 detects the operation mistake by ACTIVE_LOW and NOTE_ID0 of DOCKED# being high and activates an alarm (not shown).

However, since the main bus 33 is electrically isolated by the main bus isolator 31, the hardware on the main bus 33 side cannot be electrically damaged by a sudden docking. Accordingly, the power of the host 50 need not be forcibly shut down, and the user can avoid the suspending of a task by such an operation mistake. (Also from comparison with the prior art in which the power of the host was forcibly shut down (see Table 1), those skilled in the art will understand that this embodiment is effective.)

### F-2. Docking when the host is in a suspend state

If docking is attempted when the host 50 is in a suspend state (step 900), the docking side 60 forcibly inhibits the host 50 from being resumed and beeps to warn that the connection is unauthorized (step 904).

### F-3. Docking when the host is in a power-off state

Docking when the host 50 is in a power-off state is an operation which is usually allowed even in the prior art. Accordingly, by subsequently turning on the power of the host 50, the docking side 60 is installed normally by the OS or utility 72, as are the other devices (step 906).

### G. Undocking operation if the portable computer is of the conventional type

If the host 50 is of the old type, it cannot handle the SMI generated on the docking side 60 and hence the docking performs another operation, as described in sections D and F. In addition, the undocking of both systems 50 and 60 is similar to this, and if the host is determined to be of the old type in step 504 in Figure 11, another operation is performed through the branch W. In this item, the operation after the branch W is described using Figure 16.

### G-1. Undocking when the host is in an ordinary operating state

In the undocking of both systems 50 and 60 is attempted when the host 50 is in an ordinary operating state (step 910), the docking side 60 beeps to warn the user that it is an operation mistake (step 912). In addition to the warning, the docking side 60 may lock the undocking of the host 50 by hardware.

### G-2. Undocking when the host is in a suspend state

If the undocking of both systems 50 and 60 is attempted when the host 50 is in a suspend state (step 910), the docking side 60 forcibly inhibits the host 50 from being resumed and beeps to warn that the undocking is unauthorized (step 904).

### G-3. Undocking when the host is in a power-off state

The undocking of both systems 50 and 60 when the host 50 is in a power-off state is an operation which is usually allowed even in the prior art. Accordingly, the user can freely undock both systems 50 and 60 (step 916). In addition, if the power of the host 50 is turned on again, POR is executed in the usual manner.

### Advantages of the invention

As described above, in accordance with the present invention, a user-friendly docking device for a portable computer, and a method for controlling the same, can be provided. More particularly, even if the portable computer is in an ordinary power-on state or a power save mode such as suspend (in other wards, an active state in which the power supply to the portable computer is not completely shut down), the portable computer can be docked with the docking device without risk of hardware or software damage, without an incongruity as viewed from the user, and smoothly.

Accordingly, even if all of the signals are mechanically integrated to be connected, the signals which can be actively inserted or removed can also be electrically connected to enable immediate use by the user, while the signals which cannot be actively inserted or removed remain electrically isolated, and thus hardware damage or malfunction of the system can be avoided.

## Claims

1. A docking device for a portable computer which is dockable with a portable computer by one or more connections for passing signals between the docking device and the portable computer, the docking device comprising:
a first connection means for electrically connecting to said portable computer those of said connections which are arranged to carry a first set of signals which can be actively inserted or removed;
a second connection means for electrically isolating from and connecting to said portable computer those of said connections which are arranged to carry a second set of signals which cannot be actively inserted or removed; and
a control means for controlling the signal isolation and connection by said second connection means.

2. A docking device as claimed in claim 1, wherein the connections for carrying said signals are mechanically integrated to enable connection with corresponding connections of said portable computer.

3. A docking device as claimed in claim 1 or claim 2, wherein said control means sends a previous notification of connection to said portable computer prior to the isolation or connection by said second connection means, the isolation or connection of said second set of signals being performed in response to a reply signal from said portable computer.

4. A docking device as claimed in claim 3, wherein said control means is arranged to send the previous notification of connection in the form of a software interrupt.

5. A docking device as claimed in any preceding claim, wherein said control means monitors the activity status of said second set of signals to control the isolation and connection by said second connection means according to the activity status of a system bus of the portable computer.

6. A docking device as claimed in any preceding claim, wherein the signals which can be actively inserted or removed are port signals.

7. A docking device as claimed in any preceding claim, wherein the signals which cannot be actively inserted or removed include bus signals.

8. A method of operating a docking device for a portable computer which is dockable with a portable computer by one or more connections for passing signals between the docking device and the portable computer, the signals comprising a first set of signals which can be actively inserted or removed and a second set of signals which cannot be actively inserted or removed, the method comprising the step of electrically connecting said first set of signals with said portable computer, whilst electrically isolating said second set of signals from said portable computer.

9. A method as claimed in claim 8, further comprising the steps of:
sending a previous notification step from said docking device to said portable computer to notify the portable computer that docking has been initiated;
receiving an instruction from said portable computer to instruct said docking device whether to perform the electrical connection of said second set of signals; and
in response to said instruction from the portable computer, either electrically connecting said second set of signals to said portable computer or maintaining the electrical isolation of said second set of signals.

10. A method as claimed in claim 9, wherein said previous notification is performed by a software interrupt.

11. A method as claimed in claim 9 or claim 10, wherein in said instruction step, said portable computer issues said instruction provided that said docking device does not conflict with the resources of the portable computer.

12. A method as claimed in any of claims 9 to 11, wherein the connection of said second set of signals is performed according to the activity status of said second set of signals.
